# EUROPÄISCHE PATENTSCHRIFT

(11) **EP 1 508 807 B1**
(45) Veröffentlichungstag und Bekanntmachung des Hinweises auf die Patenterteilung: **28.01.2009**
(21) Anmeldenummer: 04019390.6
(22) Anmeldetag: 16.08.2004
(51) Int. Cl.: G01N 35/00, G01N 35/10

(54) **Positioniereinrichtung für ein Testelement**
Positioning device for a test element
Unité de positionnement d'éléments de test

(30) Priorität: 21.08.2003 DE 10338446
(43) Veröffentlichungstag der Anmeldung: 23.02.2005
(73) Patentinhaber: F. Hoffmann-La Roche AG, 4070 Basel (CH); Roche Diagnostics GmbH, 68305 Mannheim (DE)
(72) Erfinder: Hübner, Ute, 64653 Lorsch (DE); Stenkamp, Bernd, 69120 Heidelberg (DE); Schabbach, Michael, 69469 Weinheim (DE); Kern, Bernhard, 69123 Heidelberg (DE)
(74) Vertreter: Isenbruck, Günter

(56) Entgegenhaltungen:
- EP-A- 0 405 513
- EP-A- 0 833 145
- DE-A1- 19 844 500
- US-A- 5 091 154
- US-B1- 6 506 168

## Beschreibung

Die vorliegende Erfindung betrifft eine Positioniereinrichtung für ein Testelement und ein Verfahren zur Positionierung eines Testelementes in einem Analysegerät.

Zur Analyse von Proben, beispielsweise Körperflüssigkeiten wie Blut oder Urin, werden häufig Testelement-Analysesysteme verwendet, bei denen sich die zu analysierenden Proben auf einem Testelement befinden und gegebenenfalls mit einer oder mehreren Reagenzien auf dem Testelement reagieren, bevor sie analysiert werden. Die optische, insbesondere photometrische Auswertung von Testelementen stellt eines der gebräuchlichsten Verfahren zur schnellen Bestimmung der Konzentration von Analyten in Proben dar. Photometrische Auswertungen werden allgemein im Bereich der Analytik, der Umweltanalytik und vor allem im Bereich der medizinischen Diagnostik eingesetzt. Insbesondere im Bereich der Blutglukosediagnostik aus Kapillarblut besitzen Testelemente, die photometrisch ausgewertet werden, einen großen Stellenwert.

Es gibt verschiedene Formen von Testelementen. Bekannt sind zum Beispiel im Wesentlichen quadratische Blättchen, die auch als Slides bezeichnet werden, in deren Mitte sich ein mehrschichtiges Testfeld befindet. Diagnostische Testelemente, die streifenförmig ausgebildet sind, werden als Teststreifen bezeichnet. Im Stand der Technik sind Testelemente umfassend beschrieben, beispielsweise in den Dokumenten DE-A 197 53 847, EP-A 0 821 233, EP-A 0 821 234 oder WO 97/02487. Die vorliegende Erfindung bezieht sich auf Testelemente beliebiger Form.

Die Positionierung der Testelemente in dem Testelement-Analysesystem ist sowohl für die Genauigkeit der Analyse als auch für die Einfachheit der Handhabung von großer Bedeutung. Ein Ziel bei der Durchführung analytischer Tests ist es, die eingesetzten Probenmengen zu reduzieren, beziehungsweise eine zuverlässige Analyse durchzuführen, auch wenn nur geringe Probenmengen vorhanden sind. Im Bereich der Blutzuckeranalyse muss dem Menschen ein Blutstropfen aus einem Körperteil entnommen werden, wobei es für ihn angenehmer ist, wenn die für den Test notwendige Blutmenge möglichst gering ist. Mit der Reduktion der Probenmengen ist eine Verkleinerung der Testelemente und insbesondere der auf den Testelementen befindlichen Nachweiszonen verbunden. Um eine exakte Analyse der Probe zu gewährleisten, ist eine präzise Positionierung der Nachweiszone in dem Testelement-Analysegerät notwendig. Eine falsche räumliche Ausrichtung des Testelementes führt unmittelbar zu einer Verkleinerung der effektiven Messfläche und kann dadurch zu einem Messfehler führen.

Im Stand der Technik ist eine Vielzahl von Positioniereinrichtungen für Testelemente bekannt. Aus der EP-B 0 618 443 ist ein Teststreifen-Analysesystem bekannt, bei dem eine Positionierung der Nachweiszonen des Testelementes sowohl lateral als auch vertikal zur Messoptik erfolgt, indem eine quer zu seiner Längsachse und parallel zu seiner Oberfläche orientierte Biegeachse für die Positionierung genutzt wird. Weitere Positioniereinrichtungen für Testelemente sind zum Beispiel den Dokumenten DE-A 38 44 103 oder EP-A 0 319 922 zu entnehmen.

Diese beispielhaft genannten Positioniereinrichtungen aus dem Stand der Technik sind ohne weiteres geeignet zur Positionierung und anschließenden zuverlässigen Analyse von Testelementen mit Nachweiszonen, die eine Größe von 5mm x 5mm übersteigen. Wird die Nachweiszone in ihrer lateralen Ausdehnung demgegenüber aber verkleinert, ist die Positionierung der Testelemente mit Hilfe dieser Positioniereinrichtungen aus dem Stand der Technik nicht ausreichend präzise.

Eine Positioniereinrichtung für Testelemente aus dem Stand der Technik, die eine verlässliche Auswertung von Testelementen mit kleineren Nachweiszonen erlaubt, ist aus dem Dokument WO 00/19185 bekannt. Zur Halterung des Testelementes in der Auswerteposition besitzt diese Positioniereinrichtung einen verschiebbar gelagerten Zapfen mit einem nach unten konisch zulaufenden Ende. Bei geeigneter Positionierung befindet sich die Spitze des Zapfens in einer Ausnehmung des Testelementes, so dass das Testelement in Richtung seiner Längsachse fixiert und positioniert wird. Der Zapfen kann auch dazu dienen, die Anwesenheit eines Testelementes beziehungsweise dessen Positionierung elektrisch zu signalisieren. Hierzu wird der Zapfen elektrisch leitfähig ausgeführt und auf der ihm gegenüberliegenden Seite der Vorrichtung ein Kontakt vorgesehen. Ohne ein Testelement wird der Zapfen mittels einer Feder gegen den Kontakt gedrückt und ein elektrischer Kontakt zwischen diesen beiden Elementen hergestellt. Wird nun ein Testelement eingeschoben, so schiebt es sich zunächst zwischen Zapfen und Kontakt, so dass der elektrische Kontakt aufgehoben wird. Beim Weiterschieben greift jedoch der Zapfen durch die Nut des Testelementes hindurch und der elektrische Kontakt schließt sich erneut. Nachteilig ist bei dieser Positioniereinrichtung, dass sie aufwendig in der Herstellung ist, da viele elektrische Kontaktstellen benötigt werden, die durch komplexe Oberflächenbeschichtung hergestellt werden. Ferner übernehmen mehrere Bestandteile der Positioniereinrichtung (zum Beispiel der Zapfen) sowohl elektrische als auch mechanische Funktionen, so dass an ihr Material sehr unterschiedliche Anforderungen gestellt werden. Beispielsweise müssen aus Metall und Kunststoff kombinierte Teile verwendet werden. Ein weiterer großer Nachteil dieser aus WO 00/19185 bekannten Positioniereinrichtung ist, dass der Kontakt, gegen den der Zapfen gedrückt wird, schnell durch die Probe verschmutzt werden kann. Die Probe, die sich auf dem Testelement befindet, kann zum Beispiel durch die Ausnehmung des Testelementes auf den Kontakt gelangen.

DE 198 44 500 A1 bezieht sich auf ein Verfahren zur photometrischen Auswertung von Testelementen mit einer Nachweiszone, das stabil gegen Positionierungstoleranzen der Nachweiszone ist. Zur Halterung des Testelements in einer Auswerteposition wird eine Vorrichtung beschrieben, die einen verschiebbar gelagerten Zapfen mit einem nach unten konisch zulaufenden Ende aufweist. Bei geeigneter Positionierung befindet sich die Spitze des Zapfens in einer Ausnehmung des Testelements, so dass das Testelement in Richtung seiner Längsachse fixiert und positioniert wird. Der Zapfen kann auch dazu dienen, die Anwesenheit eines Testelements bzw. dessen Positionierung elektrisch zu signalisieren. Hierzu wird der Zapfen elektrisch leitfähig ausgeführt und auf der ihm gegenüberliegenden Seite der Vorrichtung ein Kontakt vorgesehen. Wenn der Zapfen durch eine Ausnehmung in dem Testelement hindurchgreift, schließt sich der elektrische Kontakt.

US 6,506,168 betrifft ein Verfahren und eine Vorrichtung zum Erhalten einer Blutprobe von einem Patienten für anschließende diagnostische Tests. Die Vorrichtung ist so ausgebildet, dass sie detektieren kann, ob ein Testelement in die Vorrichtung eingeschoben wird, jedoch nicht in welcher Position sich dieses Testelement befindet. Zum Detektieren der Anwesenheit eines Testelements wird ein Schalter eingesetzt, der durch das Einschieben des Testelements geschlossen wird.

Aufgabe der vorliegenden Erfindung ist es daher, die genannten Nachteile des Standes der Technik zu vermeiden und eine Positioniereinrichtung für Testelemente, ein Testelement-Analysesystem und ein Verfahren zur Positionierung von Testelementen bereitzustellen, die eine verlässliche Auswertung von Testelementen mit kleinen Nachweiszonen erlauben. Ferner soll eine funktionale Trennung zwischen Mechanik und Elektrik in der Positioniereinrichtung ermöglicht werden. Dabei soll zum elektrischen Signalisieren der Positionierung des Testelementes eine toleranzarme Übertragung der Schaltfunktion auf eine entfernt liegende Platine erfolgen.

Diese Aufgabe wird erfindungsgemäß gelöst durch eine Positioniereinrichtung für ein Testelement, umfassend
- eine Auflagefläche für das Testelement,
- eine entweder auf der Auflagefläche neben dem Testelement oder auf einer Referenzoberfläche des auf der Auflagefläche liegenden Testelementes aufsitzende, als Referenz dienende erste Schalterkomponente und
- eine parallel zu der ersten Schalterkomponente angeordnete, auf dem eine positionsspezifische Oberflächengestaltung aufweisenden Testelement aufsitzende zweite Schalterkomponente, die je nach Oberflächengestaltung des Testelementes senkrecht zur Auflagefläche auslenkbar ist,
wobei die Schaltposition eines Schalters zum elektrischen Signalieren einer Positionierung des Testelements von der Auslenkung der zweiten Schalterkomponente relativ zu der ersten Schalterkomponente abhängt, wobei eine Ebene, auf der die erste Schalterkomponente aufsitz, als Referenzebene dient, zu den geschaltet wird.

Der Schalter dient dazu, die Positionierung des Testelementes elektrisch zu signalisieren. Dabei hängt die Schaltposition von der Auslenkung der zweiten Schalterkomponente relativ zu der ersten Schalterkomponente ab. Die erste Schalterkomponente dient als Referenz. Sie sitzt während des Positioniervorganges entweder auf der Auflagefläche für das Testelement neben dem Testelement auf, oder auf einer Referenzoberfläche des auf der Auflagefläche liegenden Testelementes. Die Ebene, auf der die erste Schalterkomponente aufsitzt (Auflagefläche oder Referenzoberfläche) dient als Referenzebene, zu der geschaltet wird.

Die zweite Schalterkomponente ist parallel zu der ersten Schalterkomponente angeordnet. Sie sitzt auf der Oberfläche des Testelementes auf und wird durch die Oberflächengestaltung des Testelementes relativ zu der ersten Schalterkomponente ausgelenkt. Die beiden Schalterkomponenten sind präzise gefertigt und aufeinander abgestimmt.

Die Oberflächengestaltung des Testelementes ist positionsspezifisch, d.h. an einer bestimmten Position erfährt die zweite Schalterkomponente eine definierte Auslenkung. Somit können die Oberflächengestaltung des Testelementes und die Anordnung der Schalterkomponenten beispielsweise derart gewählt sein, dass bei mindestens einer Position des Testelementes (zum Beispiel der Analyseposition) der Schalter durch die Auslenkung der zweiten relativ zu der ersten Schalterkomponente geschlossen ist und dadurch das präzise Erreichen der gewünschten Testelementposition elektrisch signalisiert wird.

In einer bevorzugten Ausführungsform der vorliegenden Erfindung weist das Testelement eine positionsspezifische Oberflächengestaltung auf, die eine Probenaufnahmeposition und eine Probenanalyseposition kennzeichnet. Die Probenaufnahmeposition ist diejenige Position des Testelementes, in der die Probe, beispielsweise ein Blutstropfen, aus der Fingerbeere eines Diabetikers auf das Testelement aufgebracht wird. Bei einer manuellen Übertragung der Probe auf das Testelement kann die Probenaufnahmeposition zum Beispiel so gewählt sein, dass das Testelement aus einem Testelement-Analysesystem ausreichend weit hinausragt, damit die Probe problemlos übertragen werden kann, um in die Nachweiszone zu gelangen. Bei einem integrierten Testelement-Analysesystem, das neben einem Analysegerät auch ein System zur automatischen Entnahme der Probe umfasst, wird die Probenaufnahmeposition so gewählt, dass die Probe präzise in die Nachweiszone des Testelementes transportiert wird.

Damit die Probe in die Nachweiszone gelangt, muss sie sowohl bei der manuellen als auch bei der automatischen Entnahme entweder direkt auf die Nachweiszone aufgegeben werden oder in die Nachweiszone hineintransportiert werden. Letzteres ist insbesondere bei Kapillarspalt-Testelementen der Fall, bei denen die Probe (zum Beispiel Blut aus der Fingerbeere) an den Kapillarspalt herangeführt wird und durch diesen der Nachweiszone zugeführt wird. Es sind auch Ausführungsformen denkbar, bei denen eine feste Probe, beispielsweise durch Reiben eines Flieses an einem Gegenstand, auf das Flies aufgebracht wird, und die Probe darauf folgend mittels eines Hilfsfluides aus dem Flies zur Nachweiszone transportiert wird, wie dies beispielsweise bei einigen Drogenschnelltests der Fall ist. Weiterhin gibt es Chromatographie-Teststreifen, bei denen die Probe über saugfähige Materialien in die Nachweiszone hineingebracht wird.

Die Probenanalyseposition ist diejenige Position des Testelementes, in der die Analyse der in der Nachweiszone vorhandenen Probe stattfindet. Bei einigen Testelement-Analysesystemen können die Probenaufnahmeposition und die Probenanalyseposition übereinstimmen. Dies hat den Vorteil, dass die Position des Testelementes nach der Probenaufnahme nicht mehr verändert werden muss. Meist ist es jedoch vorteilhaft, wenn es sich um zwei verschiedene Positionen des Testelementes handelt. So kann beispielsweise ein Kapillarspalt-Testelement eine kürzere Kapillare enthalten, wenn die Nachweiszone nach der Probenaufnahme noch in eine Messposition in dem Analysegerät bewegt wird, und die Probe daher einen kürzeren Weg in der Kapillare bis zur Nachweiszone zurücklegen muss.

Die Erfindung bezieht sich weiterhin auf ein Verfahren zur Positionierung eines Testelementes in einem Analysesystem mit folgenden Verfahrensschritten:
- Veränderung der Position eines Testelementes in dem Analysesystem auf einer Auflagefläche unter einer federnd gelagerten zweiten Schalterkomponente hindurch, bis die zweite Schalterkomponente in einer definierten Testelementposition aufgrund der Oberflächengestaltung des Testelementes eine definierte Auslenkung relativ zu einer auf der Auflagefläche oder einer Referenzoberfläche auf dem Testelement aufsitzenden ersten Schalterkomponente erfährt und
- Schließen eines elektrischen Schalters, der dazu dient, eine Positionierung des Testelements elektrisch zu signalieren aufgrund der definierten Auslenkung der zweiten relativ zu der ersten Schalterkomponente.

Bei dem erfindungsgemäßen Verfahren liegt das Testelement auf einer Auflagefläche. Die Veränderung der Position des Testelementes erfolgt entweder manuell durch einen Menschen, der das Analysegerät bedient, oder automatisch, beispielsweise durch ein mittels einer Antriebseinheit bewegtes Stößel. Das Testelement gleitet dabei unter einer federnd gelagerten zweiten Schalterkomponente hindurch. Hierbei wird die zweite Schalterkomponente durch die Oberflächengestaltung des Testelementes relativ zu der ersten Schalterkomponente ausgelenkt, die auf der Auflagefläche des Testelementes oder auf einer Referenzoberfläche auf dem Testelement aufsitzt. Die Oberflächengestaltung (zum Beispiel Erhebungen oder Vertiefungen) ist wiederum positionsspezifisch, so dass das Erreichen mindestens einer bestimmten Position anhand der aufgrund dieser Oberflächengestaltung erfolgten Auslenkung der zweiten Schalterkomponente relativ zu der ersten Schalterkomponente erkannt und bei geschlossenem Schalter per elektrischem Signal an das Testelement-Analysesystem rückgemeldet wird.

Die Veränderung der Position des Testelements kann in dem Analysesystem beispielsweise mit Hilfe eines automatischen Vorschubs erfolgen und der Vorschub bei einer bestimmten Position des elektrischen Schalters oder nach einer bestimmten Abfolge von Positionen des elektrischen Schalters abgeschaltet werden. Eine Abfolge von Positionen des elektrischen Schalters kann dabei ein geöffneter Schalter vor dem Einschieben eines Testelements sein, ein geschlossener Schalter beim Einschieben und ein erneut geöffneter Schalter beim Erreichen der Messposition. Der automatische Vorschub wird nach dieser Abfolge von Positionen, also bei Erreichen der Messposition, abgeschaltet, sodass das Testelement in dieser Messposition verbleibt. Die Veränderung der Position des Testelements kann in dem Analysesystem aber auch manuell erfolgen.

In einer bevorzugten Ausführungsform der vorliegenden Erfindung fixiert die zweite Schalterkomponente das Testelement in einer Position, in der der elektrische Schalter geschlossen ist. Durch dieses Fixieren wird sichergestellt, dass das Testelement seine Position während der Probenaufnahme oder der Probenanalyse nicht verändert, selbst bei Erschütterungen des Analysesystems. Dabei bedeutet Fixieren ein Anpressen des Testelementes an seine Auflagefläche mit einer definierten Kraft und/oder ein gegebenenfalls formschlüssiges Eingreifen der zweiten Schalterkomponente in eine Vertiefung oder Öffnung in dem Testelement, wodurch eine genaue Ausrichtung und ein Festhalten des Testelementes erreicht werden.

Mit Hilfe des Schalters wird das Testelement mindestens in einer Position in dem Analysesystem positioniert. In einer bevorzugten Ausführungsform der vorliegenden Erfindung wird das Testelement in dem Analysesystem aus einem Vorratsbehältnis hinausgeschoben, in einer Probenaufnahmeposition positioniert, in einer Analyseposition positioniert und gegebenenfalls in ein Aufbewahrungsbehältnis bewegt. Testelemente werden üblicherweise in einem Vorratsbehältnis verpackt, um sie vor schädlichen Umwelteinflüssen wie Licht, Feuchtigkeit oder mechanischer Einwirkung zu schützen oder unter sterilen Bedingungen aufzubewahren. Die Testelemente können manuell oder vorzugsweise durch eine mechanische Vorrichtung aus dem Vorratsbehältnis entnommen werden, wobei die in dem Vorratsbehältnis in ungeöffneten Kammern verbleibenden Testelemente durch eine Einzelversiegelung mittels einer Folie weiterhin geschützt sind. Die Entnahme der Testelemente erfolgt zum Beispiel durch Hinausschieben aus der Kammer mit Hilfe eines Stößels. Vorratsbehältnisse für analytische Verbrauchsmittel und die entsprechenden Vorrichtungen zum Entnehmen der Verbrauchsmittel sind im Stand der Technik umfangreich beschrieben und dem Fachmann in einer Vielzahl von Ausführungsformen geläufig. In diesem Zusammenhang wird beispielsweise auf folgende Dokumente verwiesen: EP-A 0 622 119, EP-A 0 732 590, EP-A 0 738 666, US 5,489,414, US 5,510,266, US 5,720,924, US 5,632,410 sowie DE-A 19854316 und EP-A 1 022 565.

Die Vorratsbehältnisse, die auch als Magazine bezeichnet werden, sind zumeist für den Einsatz in Messgeräten, insbesondere in kompakten Messgeräten konzipiert.

Die Entnahme eines Testelementes ist in vielen Ausführungsformen automatisiert, beispielsweise um Fehlbedienungen auszuschließen oder um die Bedienungsfreundlichkeit zu erhöhen. In diesen Fällen wird der die Entnahme eines Testelementes bewirkende Stößel mittels einer Antriebseinheit, die einen elektrischen Antriebsmotor und eventuell ein Getriebe umfasst, bewegt. Beispiele konventioneller manueller, motorischer und automatisierter Vorrichtungen zum Entnehmen von Testelementen aus Vorratsbehältnissen sind in den oben genannten Dokumenten beschrieben.

Nach der Entnahme des Testelementes aus dem Vorratsbehältnis wird es vorzugsweise mittels einer erfindungsgemäßen Positioniereinrichtung beziehungsweise durch das erfindungsgemäße Verfahren in der Probenaufnahmeposition positioniert. Nach erfolgter Probenaufnahme wird das Testelement erfindungsgemäß in der Analyseposition positioniert, falls die Probenaufnahmeposition und die Analyseposition voneinander abweichen. Im Anschluss an die Analyse der Probe wird das Testelement entweder aus dem Testelement-Analysesystem ausgestoßen und muss dann einzeln aufbewahrt oder entsorgt werden, oder es wird in ein Aufbewahrungsbehältnis in dem Testelement-Analysesystem bewegt. Eine weitere mögliche Position, in der das Testelement gemäß der vorliegenden Erfindung positioniert werden kann, ist eine Position, in der ein als optische Referenz ausgeprägter Teil des Testelements über der Optik positioniert wird, der dazu dient, die Qualifizierung der Nachweiszone bezüglich Alterung zu ermöglichen.

Die vorliegende Erfindung bezieht sich weiterhin auf ein Testelement-Analysesystem umfassend Testelemente und ein Analysegerät, wobei die Testelemente eine definierte positionsspezifische Oberflächengestaltung aufweisen und das Analysegerät eine erfindungsgemäße Positioniereinrichtung enthält, um ein Testelement in mindestens einer bestimmten Position zu positionieren. Das Analysegerät ist dabei zum Beispiel ein Gerät zur photometrischen Auswertung von Testelementen. Vorzugsweise weist das erfindungsgemäße Testelement-Analysegerät mindestens eine erfindungsgemäße Positioniereinrichtung auf, um ein Testelement in einer Probenaufnahmeposition und in einer Analyseposition zu positionieren. In einer bevorzugten Ausführungsform der vorliegenden Erfindung umfasst das Testelement-Analysesystem ein System zur Entnahme von Körperflüssigkeit aus einem Körperteil. Im Stand der Technik ist eine Vielzahl von Körperflüssigkeits-Entnahmesystemen bekannt, beispielsweise aus WO 01/89383. Sie dienen zum Beispiel dazu, Kapillarblut aus der Fingerbeere oder Blut oder interstitielle Flüssigkeit aus anderen Körperteilen zu gewinnen. Die so gewonnene Körperflüssigkeit wird auf das Testelement aufgebracht, um in einem Analysegerät analysiert zu werden, zum Beispiel auf ihren Glukosegehalt.

In einer Ausführungsform der vorliegenden Erfindung umfasst das Testelement-Analysesystem ein Vorratsbehältnis für Testelemente und eine Entnahmevorrichtung zur automatischen Entnahme mindestens eines Testelementes aus dem Vorratsbehältnis. Vorzugsweise ist das erfindungsgemäße Testelement-Analysesystem ein integriertes System, mit dem eine Probenentnahme (zum Beispiel Perforation der Haut und Aufnahme von Blut auf ein Testelement, das aus einem Vorratsbehältnis entnommen und zur Probenaufnahmeposition transportiert und dort positioniert wird) und eine Probenanalyse (zum Beispiel Transport und Positionierung des Testelementes mit Probe in der Analyseposition, Messung und Auswertung der relevanten Größen, Anzeigen des Analyseergebnisses) voll automatisch erfolgen.

In einer bevorzugten Ausführungsform der vorliegenden Erfindung wird das erfindungsgemäße Testelement-Analysesystem zur Analyse von Glukose im Blut verwendet.

Anhand der Zeichnung wird die Erfindung nachstehend näher erläutert.

Es zeigt:
- Figur 1: eine schematische Darstellung einer erfindungsgemäßen Positioniereinrichtung für ein Testelement,
- Figur 2: eine perspektivische Darstellung eines Details aus Figur 1,
- Figur 3: einen Ausschnitt aus einer weiteren Ausführungsform einer erfindungsgemäßen Positioniereinrichtung für ein Testelement,
- Figur 4: eine schematische Darstellung einer weiteren Ausführungsform einer erfindungsgemäßen Positioniereinrichtung für ein Testelement,
- Figur 5: eine schematische Darstellung einer weiteren Ausführungsform einer erfindungsgemäßen Positioniereinrichtung für ein Testelement und
- Figur 6: eine perspektivische Darstellung eines Details einer weiteren Ausführungsform der vorliegenden Erfindung mit Federplatte und Kontaktfeder.

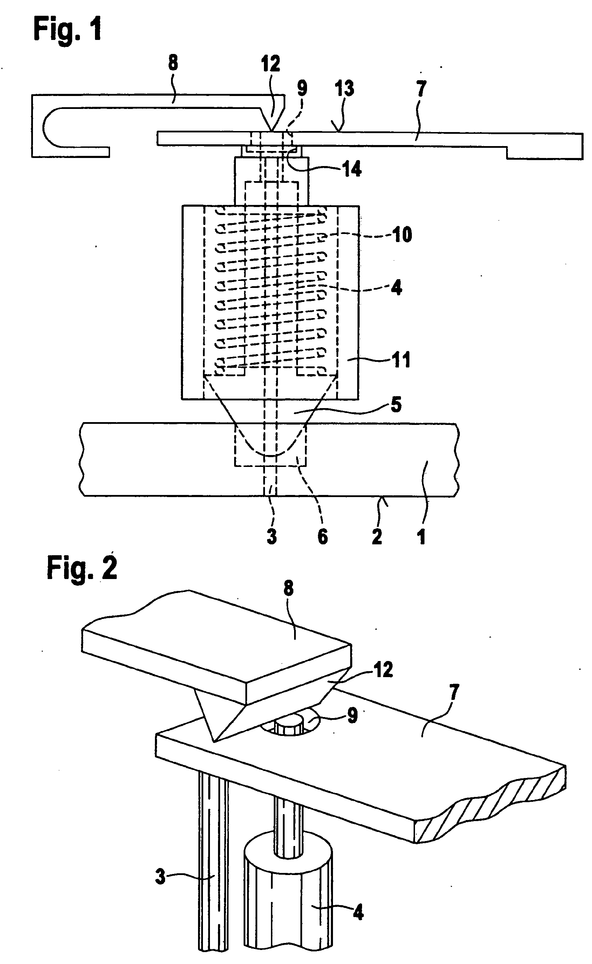

Figur 1 zeigt eine erste Ausführungsform einer erfindungsgemäßen Positioniereinrichtung für Testelemente.

In dieser bevorzugten Ausführungsform der vorliegenden Erfindung ist die erste Schalterkomponente ein auf der Auflagefläche aufsitzender Stift und die zweite Schalterkomponente ein verschiebbar gelagerter Zapfen mit einem dem Testelement zugewandten konisch zulaufenden Ende, und das Testelement weist als positionsspezifische Oberflächengestaltung mindestens eine das konisch zulaufende Ende des Zapfens aufnehmende Ausnehmung auf.

Das Testelement 1, beispielsweise ein Teststreifen, befindet sich auf einer Auflagefläche 2. Der als erste Schalterkomponente 3 dienende Stift sitzt mit seinem einen Ende auf der Auflagefläche 2 auf. Die Funktion der zweiten Schalterkomponente 4 übernimmt ein verschiebbar gelagerter Zapfen mit einem dem Testelement 1 zugewandten, konisch zulaufenden Ende 5. Die erste Schalterkomponente 3 und die zweite Schalterkomponente 4 sind parallel zueinander angeordnet (in Figur 1 hintereinander). Die zweite Schalterkomponente 4 ist senkrecht zur Auflagefläche 2 auslenkbar. Das Testelement 1 weist mindestens eine Ausnehmung 6 auf, die das konisch zulaufende Ende 5 der zweiten Schalterkomponente 4 aufnehmen kann. Diese Ausnehmung 6 ist eine positionsspezifische Oberflächengestaltung des Testelementes 1, d.h. die Ausnehmung 6 ist an einer bestimmten Position des Testelementes 1 angeordnet, so dass sich das Testelement 1 in einer gewünschten Position, zum Beispiel in einem Testelement-Analysesystem befindet, sobald die Ausnehmung 6 das konisch zulaufende Ende 5 der zweiten Schalterkomponente 4 aufnimmt. Zur Positionierung des Testelementes 1 in dieser gewünschten Position wird die Position des Testelementes 1 manuell oder automatisch verändert und dabei unter der federnd gelagerten zweiten Schalterkomponente 4 hindurchgeschoben, bis sich die zweite Schalterkomponente 4 über der Ausnehmung 6 befindet und in sie hinein ausgelenkt wird.

Durch diese Auslenkung der zweiten Schalterkomponente 4 relativ zu der als Referenz dienenden und auf der Auflagefläche 2 aufsitzenden ersten Schalterkomponente 3 wird ein Schalter geschlossen, wodurch die gewünschte Positionierung des Testelementes 1 signalisiert wird.

Bei der in Figur 1 dargestellten Ausführungsform der vorliegenden Erfindung bestimmt die erste Schalterkomponente 3 die Auslenkung einer Federplatte, die ihrerseits eine Kontaktfeder anhebt, und die zweite Schalterkomponente 3 überträgt ihre Auslenkung auf diese Kontaktfeder, wobei ein elektrischer Schalter geschlossen ist, wenn sich die Kontaktfeder 8 und die Federplatte 7 berühren. Eine maximale Genauigkeit der Positionierung ist gegeben, wenn die Berührungspunkte der ersten und der zweiten Schalterkomponenten 3, 4 auf den Schaltelementen Kontaktfeder 8 und Federplatte 7 sehr klein sind und sich auf einer Linie befinden, die parallel zu den Federdrehachsen angeordnet ist.

Die Federplatte 7 und die Kontaktfeder 8 sind im Wesentlichen parallel zu der Auflagefläche 2 des Testelementes 1 angeordnet. Die erste Schalterkomponente 3 überträgt mechanisch die Referenzebene, zu der geschaltet werden soll (in der vorliegenden Ausführungsform die Ebene der Auflagefläche 2) auf die Federplatte 7. Die zweite Schalterkomponente 4 wirkt mit ihrem dem Testelement 1 abgewandten Ende auf die Kontaktfeder 8. Dazu greift die zweite Schalterkomponente 4 durch eine Öffnung 9 in der Federplatte 7 hindurch. Wenn das konisch zulaufende Ende 5 der zweiten Schalterkomponente 4 auf die Position der Ausnehmung 6 im Testelement 1 trifft, wird die zweite Schalterkomponente 4 durch die Feder 10 und auch durch die Federplatte 7 zum Testelement 1 hin ausgelenkt, wobei sie durch die Führungshülse 11 geführt wird. Dadurch nähert sich eine auf dem durch die Öffnung 9 in der Federplatte 7 hindurchgreifenden Ende der zweiten Schalterkomponente 4 aufsitzende Kontaktschneide 12 der Kontaktfeder 8 der Oberfläche 13 in der Federplatte 7. Sobald die Kontaktschneide 12 der Kontaktfeder 8 die Oberfläche 13 der Federplatte 7 berührt, wird ein elektrischer Stromkreis geschlossen und das Erreichen einer bestimmten Testelementposition detektiert. Der elektrische Schalter wird folglich erfindungsgemäß geschlossen, indem ein elektrischer Kontakt zwischen einer durch die erste Schalterkomponente ausgelenkten Federplatte und einer durch die zweite Schalterkomponente ausgelenkten Kontaktfeder hergestellt wird.

Die zweite Schalterkomponente 4 fixiert das Testelement 1, wenn sie in die Ausnehmung im Testelement 1 eingreift, so dass das Testelement 1 mit einer definierten Kraft in dieser Position gehalten wird. Ferner wird das Testelement 1 durch das exakte Ineinandergreifen von konischem Ende 5 und z.B. runder Ausnehmung 6 sehr genau ausgerichtet, da das konische Ende 5 die Ausnehmung 6 um die Symmetrieachse der zweiten Schalterkomponente 4 zentriert, wenn es in die Ausnehmung 6 hineingedrückt wird.

Die Längen der ersten Schalterkomponente 3 und der zweiten Schalterkomponente 4 sind bei der vorliegenden Erfindung präzise gefertigt. Dadurch wird die Toleranzkette zwischen dem mechanischen Bewegungsvorgang und der elektrischen Schaltfunktion so klein wie möglich gehalten und eine minimale Hysterese ermöglicht. Wenn die zum Beispiel als Stift ausgeführte erste Schalterkomponente 3 auf einer Auflagefläche 2 eines Spritzgussteiles aufliegt, kann selbst mit preiswerter Spritzgusstechnik ein Hochpräzisionsschalter für die Serienproduktion realisiert werden. Der Aufsatzpunkt der ersten Schalterkomponente 3 kann zusätzlich zur Trimmung des Schaltpunktes verwendet werden, um Teile aus mehreren Nestern zu homogenisieren. Die erste Schalterkomponente 3 bewirkt eine Vorspannung der Federplatte 7, wodurch der Abstand zu der darüberliegenden Kontaktfeder 8 beeinflusst wird.

Figur 2 zeigt eine perspektivische Darstellung eines Ausschnitts aus Figur 1.

In dem Ausschnitt ist das Zusammenwirken der beiden Schalterkomponenten 3, 4 mit der Federplatte 7 und der Kontaktfeder 8 dargestellt. Das Niveau der Federplatte 7 wird durch die erste Schalterkomponente 3 bestimmt, auf deren als Kontaktfläche ausgebildeten Ende sie aufliegt. Dabei kann das Ende der ersten Schalterkomponente 3 beispielsweise als ringförmiges Ende 14 mit zwei Erhebungen ausgebildet sein, das die Öffnung 9 umgibt (siehe Figur 1), so dass die Federplatte 7 auf den Erhebungen, die sich auf einer Linie mit Schalterkomponente 4 und parallel zu den Federdrehachsen befindet, aufliegt.

Die zweite Schalterkomponente 4 greift durch die Öffnung 9 in der Federplatte 7 hindurch und hebt je nach Auslenkung der zweiten Schalterkomponente 4 die Kontaktfeder 8 an beziehungsweise senkt sie ab. Wenn die Kontaktschneide 12 der Kontaktfeder 8 von der Oberfläche der Federplatte 7 abgehoben ist und diese folglich nicht berührt, befindet sich der durch die Federplatte 7 und die Kontaktfeder 8 gebildete Schalter in einer geöffneten Schalterposition. Wenn die Kontaktschneide 12 auf der Oberfläche der Federplatte 7 aufliegt, ist der Schalter geschlossen.

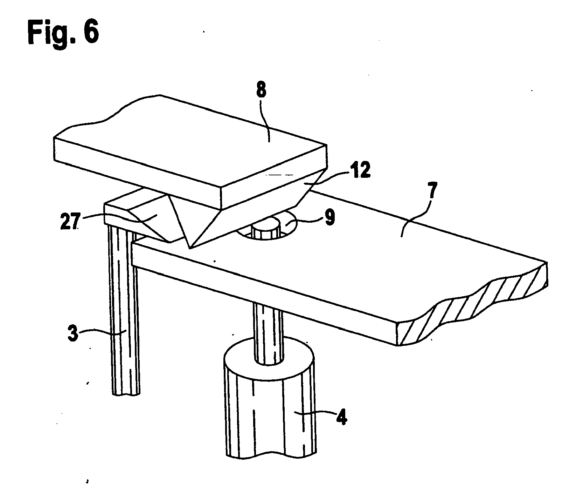

Figur 6 zeigt eine weitere perspektivische Darstellung von Federplatte und Kontaktfeder in einer anderen Ausführungsform der vorliegenden Erfindung.

Das Niveau der Federplatte 7 wird durch die erste Schalterkomponente 3 bestimmt, die mit einer an einem Vorsprung 27 vorhandenen Kontaktfläche von oben auf der Federplatte 7 aufliegt. Die zweite Schalterkomponente ist analog zu der in Figur 2 dargestellten Ausführungsform der erfindungsgemäßen Positioniereinrichtung angeordnet. Die Bezeichnung der einzelnen Komponenten mit Bezugszeichen in Figur 6 entspricht derjenigen in Figur 2.

In einer bevorzugten Ausführungsform der erfindungsgemäßen Positioniereinrichtung mit einer Federplatte 7 und einer Kontaktfeder 8, insbesondere gemäß Figur 2 oder Figur 6, bestimmt die erste Schalterkomponente 3 die Auslenkung der Federplatte 7, indem sie die Federplatte 7 mit einer Kontaktfläche kontaktiert, wobei die Federplatte in einer Richtung zu der Kontaktfläche hin vorgespannt ist. Dabei kontaktiert die Kontaktfläche die Federplatte 7 auf der der Kontaktfeder 8 zugewandten Seite, auf der der Kontaktfeder 8 abgewandten Seite oder auf beiden Seiten der Federplatte 7.

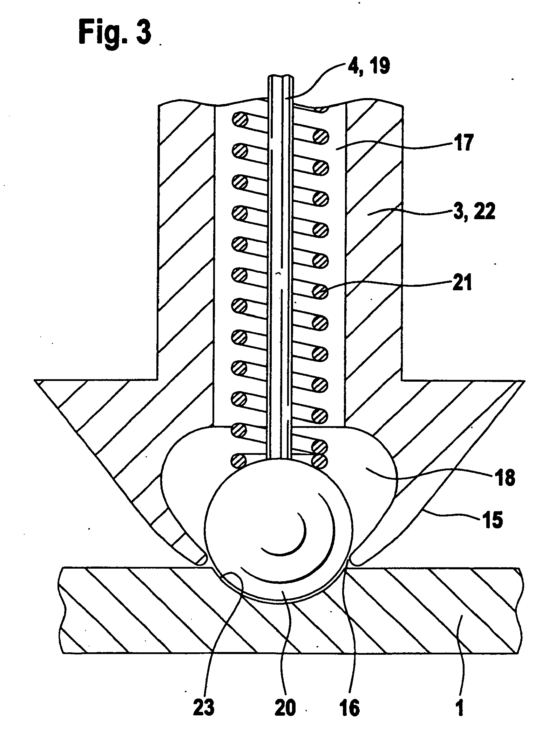

Figur 3 zeigt einen Ausschnitt aus einer weiteren Ausführungsform einer erfindungsgemäßen Positioniereinrichtung für Testelemente.

Bei dieser bevorzugten Ausführungsform der vorliegenden Erfindung ist die erste Schalterkomponente 3 ein auf einer Referenzoberfläche des Testelementes 1 aufsitzender hohler Zapfen mit einem konisch zulaufenden, dem Testelement 1 zugewandten und eine Öffnung aufweisenden Ende und die zweite Schalterkomponente 4 ein Stift mit einer kugelförmigen Spitze, wobei der Stift in dem Zapfen federnd gelagert ist und die kugelförmige Spitze im ausgefederten Zustand teilweise durch die Öffnung über das konisch zulaufende Ende des Zapfens hinausragt und im eingefederten Zustand vollständig in den Zapfen eingedrückt ist.

Die erste Schalterkomponente 3 ist dabei als hohler Zapfen 22 ausgebildet, der ein konisch zulaufendes Ende 15 mit einer Öffnung 16 aufweist. Im Inneren der ersten Schalterkomponente 3 befindet sich eine Längsbohrung 17, die in einen in dem konisch zulaufenden Ende 15 enthaltenen Hohlraum 18 mündet, an den sich wiederum die Öffnung 16 anschließt. Die Längsbohrung 17 und der Hohlraum 18 nehmen die zweite Schalterkomponente 4 auf. Die zweite Schalterkomponente 4 ist dabei ein Stift 19 mit einer kugelförmigen Spitze 20, der in der Längsbohrung 17 über die Feder 21 federnd gelagert und entlang der Symmetrieachse der Längsbohrung 17 auslenkbar ist.

Im ausgefederten Zustand, wie in Figur 3 dargestellt, ragt ein Teil der kugelförmigen Spitze 20 der zweiten Schalterkomponente 4 durch die Öffnung 16 über das konisch zulaufende Ende 15 der ersten Schalterkomponente 3 hinaus. Dies ist der Fall, wenn die Oberflächengestaltung des Testelementes 1 ein Ausfedern erlaubt, beispielsweise aufgrund einer Vertiefung 23, in die die zweite Schalterkomponente 4 ausgelenkt wird, während die erste Schalterkomponente 3 auf einer höher gelegenen Grundfläche des Testelementes 1 aufsitzt.

Im eingefederten Zustand ist die kugelförmige Spitze 20 vollständig in das konisch zulaufende Ende 15 der ersten Schalterkomponente 3 eingedrückt. Dies ist beispielsweise der Fall, wenn sowohl das konisch zulaufende Ende 15 als auch die kugelförmige Spitze auf einer ebenen Grundfläche des Testelementes 1 aufsitzen.

Durch die nichtlineare Beziehung zwischen einer horizontalen Bewegung der Vertiefung während des Positioniervorgangs und der senkrechten Auslenkung der zweiten Schalterkomponente 4 ergibt sich eine hohe Schaltempfindlichkeit.

Ein Eintauchen des konisch zulaufenden Endes 15 in eine entsprechende Vertiefung in dem Testelement 1 bewirkt bei dieser. Ausführungsform der vorliegenden Erfindung ein Zentrieren des Testelements, wohingegen ein Eintauchen der kugelförmigen Spitze 20 zur Positionierung dient. Wesentlich für diese Funktionen ist, dass die Kraft, mit der die kugelförmige Spitze 20 nach unten gedrückt wird, wesentlich geringer als die Kraft ist, mit der die erste Schalterkomponente 3 nach unten gedrückt wird.

Bei dieser Ausführungsform der vorliegenden Erfindung ist die Oberflächengestaltung des Testelementes 1 eine je nach Position des Testelementes 1 die Auslenkung des Stiftes beeinflussende Kontur. Vorzugsweise ist die Kontur als eine auf der Oberfläche des Testelementes 1 in Breite und Tiefe variierende Rinne ausgebildet. Ein breiter, tiefer Abschnitt der Rinne bewirkt dabei ein weites Ausfedern der zweiten Schalterkomponente 4, während ein schmaler, flacher Abschnitt der Rinne nur ein geringes Ausfedern erlaubt. Aufgrund der Ausfederweite (in Abhängigkeit von der Auslenkung der zweiten Schalterkomponente 4 relativ zu der ersten Schalterkomponente 3) kann eine bestimmte Position des Testelementes 1 detektiert werden.

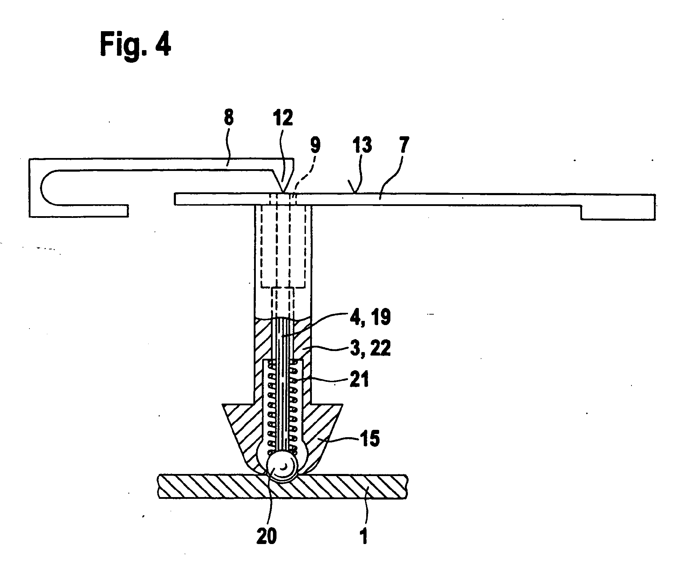

Figur 4 zeigt eine weitere Ausführungsform einer erfindungsgemäßen Positioniereinrichtung für Testelemente.

Diese Positioniereinrichtung umfasst die beiden in Figur 3 dargestellten Schalterkomponenten 3, 4, die als hohler Zapfen 22 mit konisch zulaufendem Ende 15 und als Stift 19 mit kugelförmiger Spitze 20 ausgeführt sind. Weiterhin umfasst die in Figur 4 dargestellte Positioniereinrichtung eine Federplatte 7 und eine Kontaktfeder 8, die wie bereits bezüglich Figuren 1 und 2 erläutert, zusammenwirken. Dabei liegen die Federplatte 7 auf dem dem Testelement 1 abgewandten Ende des Zapfens 22 und die Kontaktschneide 12 der Kontaktfeder auf dem durch die Öffnung 9 in der Federplatte 7 hindurchgreifenden Ende des Stiftes 19 auf. Dadurch ergibt sich ein Differenzhalter, dessen Schaltposition sich aus der Differenz der Auslenkungen der beiden auf der Oberfläche des Testelementes 1 gleitenden Schalterkomponenten 3, 4 ergibt.

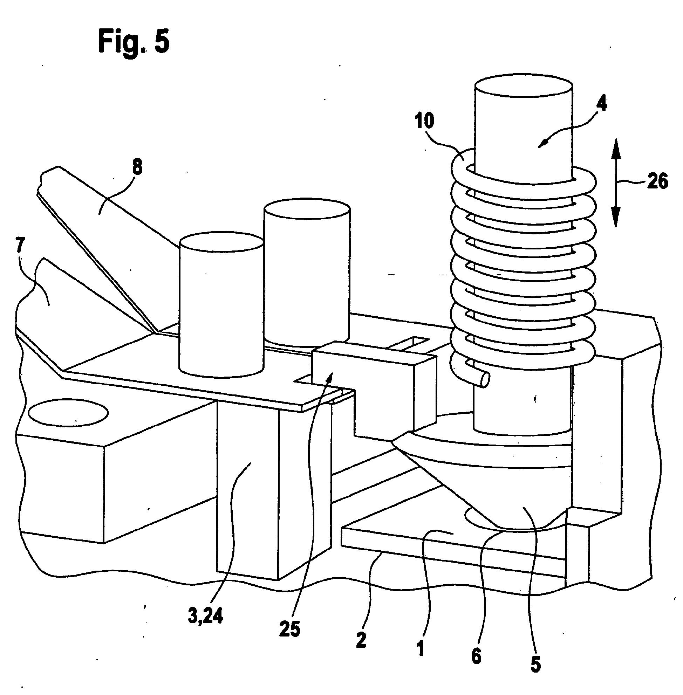

Figur 5 zeigt eine weitere Ausführungsform einer erfindungsgemäßen Positioniereinrichtung für Testelemente.

Bei dieser Ausführungsform ist die erste Schalterkomponente 3 ein neben der Auflagefläche 2 für das Testelement 1 angeordneter Absatz 24 und die zweite Schalterkomponente 4 ein verschiebbar gelagerter Zapfen mit einem dem Testelement 1 zugewandten konisch zulaufenden Ende 5. Das Testelement 1 weist als positionsspezifische Oberflächengestaltung mindestens eine das konisch zulaufende Ende 5 des Zapfens aufnehmende Ausnehmung 6 auf. Der Absatz 24 ist dabei quaderförmig ausgebildet. Denkbar wäre z.B. auch eine stufenförmige Ausbildung des Absatzes 24. In dieser Ausführungsform sind der Absatz 24 und die Auflagefläche 2 für das Testelement 1 einstückig gefertigt.

Die zweite Schalterkomponente 4 ist in Richtung der eingezeichneten Pfeile 26 verschiebbar gelagert und sie wird durch die Feder 10 zum Testelement 1 hin ausgelenkt. Der elektrische Schalter ist geöffnet, sobald die Kontaktfeder 8 durch den seitlichen Vorsprung 25 der zweiten Schalterkomponente von der Federplatte 7 in Richtung der Auflagefläche 2 des Testelements abgehoben wird. Dies ist beispielsweise der Fall, wenn das konisch zulaufende Ende 5 des Zapfens in eine Ausnehmung 6 des Testelements eingreift, wie in Figur 5 dargestellt, oder wenn sich kein Testelement 1 auf der Auflagefläche 2 befindet. Die Federplatte 7 und die Kontaktfeder 8 bilden Kontakte, die beispielsweise als Blechbiegeteile ausgeführt sind, und die elektrisch an einen (nicht dargestellten) Microcontroller zur Signalauswertung angeschlossen sind.

### Bezugszeichenliste

- 1: Testelement
- 2: Auflagefläche
- 3: erste Schalterkomponente
- 4: zweite Schalterkomponente
- 5: konisch zulaufendes Ende der zweiten Schalterkomponente
- 6: Ausnehmung im Testelement
- 7: Federplatte
- 8: Kontaktfeder
- 9: Öffnung in der Federplatte
- 10: Feder
- 11: Führungshülse
- 12: Kontaktschneide der Kontaktfeder
- 13: Oberfläche der Federplatte
- 14: ringförmiges Ende der ersten Schalterkomponente
- 15: konisch zulaufendes Ende der ersten Schalterkomponente
- 16: Öffnung im konisch zulaufenden Ende des Zapfens
- 17: Längsbohrung
- 18: Hohlraum
- 19: Stift
- 20: kugelförmige Spitze
- 21: Feder
- 22: Zapfen
- 23: Vertiefung
- 24: Absatz
- 25: Vorsprung
- 26: Pfeile
- 27: Vorsprung

## Patentansprüche

1. Positioniereinrichtung für ein Testelement (1), umfassend
- eine Auflagefläche (2) für das Testelement (1),
- eine entweder auf der Auflagefläche (2) neben dem Testelement (1) oder auf einer Referenzoberfläche des auf der Auflagefläche (2) liegenden Testelementes (1) aufsitzende, als Referenz dienende erste Schalterkomponente (3) und
- eine parallel zu der ersten Schalterkomponente (3) angeordnete, auf dem eine positionsspezifische Oberflächengestaltung aufweisenden Testelement (1) aufsitzende zweite Schalterkomponente (4), die je nach Oberflächengestaltung des Testelementes (1) senkrecht zur Auflagefläche (2) auslenkbar ist,
wobei die Schaltposition eines Schalters zum elektrischen Signalisieren einer Positionierung des Testelements (1) von einer Auslenkung der zweiten Schalterkomponente (4) relativ zu der ersten Schalterkomponente (3) abhängt, wobei eine Ebene, auf der die erste Schalterkomponente (3) aufsitzt, als Referenzebene dient, zu der geschaltet wird.

2. Positioniereinrichtung gemäß Anspruch 1, **dadurch gekennzeichnet, dass** die erste Schalterkomponente (3) ein auf der Auflagefläche (2) aufsitzender Stift und die zweite Schalterkomponente (4) ein verschiebbar gelagerter Zapfen mit einem dem Testelement (1) zugewandten konisch zulaufenden Ende (5) ist und dass das Testelement (1) als positionsspezifische Oberflächengestaltung mindestens eine das konisch zulaufende Ende (5) des Zapfens aufnehmende Ausnehmung (6) aufweist.

3. Positioniereinrichtung gemäß Anspruch 1, **dadurch gekennzeichnet, dass** die erste Schalterkomponente (3) ein neben der Auflagefläche (2) für das Testelement (1) angeordneter Absatz (24) und die zweite Schalterkomponente (4) ein verschiebbar gelagerter Zapfen mit einem dem Testelement (1) zugewandten konisch zulaufenden Ende (5) ist und dass das Testelement (1) als positionsspezifische Oberflächengestaltung mindestens eine das konisch zulaufende Ende (5) des Zapfens aufnehmende Ausnehmung (6) aufweist.

4. Positioniereinrichtung gemäß Anspruch 3, **dadurch gekennzeichnet, dass** der Absatz (24) quader- oder stufenförmig ausgebildet ist.

5. Positioniereinrichtung gemäß Anspruch 3 oder 4, **dadurch gekennzeichnet, dass** der Absatz (24) und die Auflagefläche (2) für das Testelement (1) einstückig gefertigt sind.

6. Positioniereinrichtung gemäß Anspruch 1, **dadurch gekennzeichnet, dass** die erste Schalterkomponente (3) ein auf einer Referenzoberfläche des Testelementes (1) aufsitzender hohler Zapfen (22) mit einem konisch zulaufenden, dem Testelement (1) zugewandten und eine Öffnung (16) aufweisenden Ende (15) und die zweite Schalterkomponente (4) ein Stift (19) mit einer kugelförmigen Spitze (20) ist, wobei der Stift (19) in dem Zapfen (22) federnd gelagert ist und die kugelförmige Spitze (20) im ausgefederten Zustand teilweise durch die Öffnung (16) über das konisch zulaufende Ende (15) des Zapfens (22) hinausragt und im eingefederten Zustand vollständig in den Zapfen (22) eingedrückt ist.

7. Positioniereinrichtung gemäß Anspruch 6, **dadurch gekennzeichnet, dass** die Oberflächengestaltung des Testelementes (1) eine je nach Position des Testelementes (1) die Auslenkung des Stifts (19) beeinflussende Kontur ist.

8. Positioniereinrichtung gemäß Anspruch 7, **dadurch gekennzeichnet, dass** die Kontur als eine auf der Oberfläche des Testelementes (1) in Breite und Tiefe variierende Rinne ausgebildet ist.

9. Positioniereinrichtung gemäß einem der Ansprüche 1 bis 8, **dadurch gekennzeichnet, dass** die erste Schalterkomponente (3) die Auslenkung einer Federplatte (7) bestimmt und die zweite Schalterkomponente (4) ihre Auslenkung auf eine Kontaktfeder (8) überträgt, wobei ein elektrischer Schalter geschlossen ist, wenn sich die Kontaktfeder (8) und die Federplatte (7) berühren.

10. Positioniereinrichtung gemäß Anspruch 9, **dadurch gekennzeichnet, dass** die zweite Schalterkomponente (4) durch eine Öffnung (9) in der Federplatte (7) hindurchgreift.

11. Positioniereinrichtung gemäß Anspruch 9, **dadurch gekennzeichnet, dass** die zweite Schalterkomponente (4) einen seitlichen Vorsprung (25) aufweist, über den die zweite Schalterkomponente (4) ihre Auslenkung auf die Kontaktfeder (8) überträgt.

12. Positioniereinrichtung gemäß einem der Ansprüche 9 bis 11, **dadurch gekennzeichnet, dass** die erste Schalterkomponente (3) die Auslenkung der Federplatte (7) bestimmt, indem sie die Federplatte (7) mit einer Kontaktfläche kontaktiert, wobei die Federplatte (7) in einer Richtung zu der Kontaktfläche hin vorgespannt ist.

13. Positioniereinrichtung gemäß Anspruch 12, **dadurch gekennzeichnet, dass** die Kontaktfläche die Federplatte (7) auf der der Kontaktfeder (8) zugewandten Seite, auf der der Kontaktfeder (8) abgewandten Seite oder auf beiden Seiten der Federplatte (7) kontaktiert.

14. Positioniereinrichtung gemäß einem der Ansprüche 1 bis 13, **dadurch gekennzeichnet, dass** das Testelement (1) ein Kapillarspalttestelement ist.

15. Positioniereinrichtung gemäß einem der Ansprüche 1 bis 14, **dadurch gekennzeichnet, dass** das Testelement (1) eine positionsspezifische Oberflächengestaltung aufweist, die eine Probenaufnahmeposition und eine Probenanalyseposition kennzeichnet.

16. Verfahren zur Positionierung eines Testelementes (1) in einem Analysesystem mit folgenden Verfahrensschritten:
- Veränderung der Position eines Testelementes (1) in dem Analysesystem auf einer Auflagefläche (2) unter einer federnd gelagerten zweiten Schalterkomponente (4) hindurch, bis die zweite Schalterkomponente (4) in einer definierten Testelementposition aufgrund der Oberflächengestaltung des Testelementes (1) eine definierte Auslenkung relativ zu einer auf der Auflagefläche (2) oder einer Referenzoberfläche auf dem Testelement (1) aufsitzenden ersten Schalterkomponente (3) erfährt und
- Schließen eines elektrischen Schalters, der dazu dient, eine Positionierung des Testelements (1) elektrisch zu signalisieren aufgrund der definierten Auslenkung der zweiten relativ zu der ersten Schalterkomponente (4).

17. Verfahren gemäß Anspruch 16, **dadurch gekennzeichnet, dass** die zweite Schalterkomponente (4) das Testelement (1) in einer Position fixiert, in der der elektrische Schalter geschlossen ist.

18. Verfahren gemäß einem der Ansprüche 16 oder 17, **dadurch gekennzeichnet, dass** der elektrische Schalter geschlossen wird, indem ein elektrischer Kontakt zwischen einer durch die erste Schalterkomponente (3) ausgelenkten Federplatte (7) und einer durch die zweite Schalterkomponente (4) ausgelenkten Kontaktfeder (8) hergestellt wird.

19. Verfahren gemäß einem der Ansprüche 16 bis 18, **dadurch gekennzeichnet, dass** das Testelement (1) in dem Analysegerät mindestens in einer Position mit Hilfe des Schalters positioniert wird.

20. Verfahren gemäß Anspruch 19, **dadurch gekennzeichnet, dass** das Testelement (1) in dem Analysesystem aus einem Vorratsbehältnis hinausgeschoben, in einer Probenaufnahmeposition positioniert, in einer Analyseposition positioniert und gegebenenfalls in ein Aufbewahrungsbehältnis bewegt wird.

21. Verfahren gemäß einem der Ansprüche 16 bis 20, **dadurch gekennzeichnet, dass** die Veränderung der Position des Testelements (1) in dem Analysesystem mit Hilfe eines automatischen Vorschubs erfolgt, und dass der Vorschub bei einer bestimmten Position des elektrischen Schalters oder nach einer bestimmten Abfolge von Positionen des elektrischen Schalters abgeschaltet wird.

22. Testelement-Analysesystem umfassend Testelemente (1) und ein Analysegerät, wobei die Testelemente (1) eine definierte positionsspezifische Oberflächengestaltung aufweisen und das Analysegerät eine Positioniereinrichtung gemäß einem der Ansprüche 1 bis 15 enthält, um ein Testelement (1) in mindestens einer bestimmten Position zu positionieren.

23. Testelement-Analysesystem gemäß Anspruch 22, **dadurch gekennzeichnet, dass** es mindestens eine Positioniereinrichtung gemäß einem der Ansprüche 1 bis 9 aufweist, um ein Testelement (1) in einer Probenaufnahmeposition und in einer Analyseposition zu positionieren.

24. Testelement-Analysesystem gemäß Anspruch 22 oder 23, **dadurch gekennzeichnet, dass** es ein System zur Entnahme von Körperflüssigkeit aus einem Körperteil umfasst.

25. Testelement-Analysesystem gemäß einem der Ansprüche 22 bis 24, **dadurch gekennzeichnet, dass** es ein Vorratsbehältnis für Testelemente (1) und eine Entnahmevorrichtung zur automatischen Entnahme mindestens eines Testelementes (1) aus dem Vorratsbehältnis umfasst.

26. Verwendung eines Testelement-Analysesystems gemäß einem der Ansprüche 22 bis 25 zur Analyse von Glukose in Blut.

## Claims

1. Positioning device for a test element (1), comprising
- a bearing surface (2) for the test element (1),
- a first switch component (3), which acts as reference, and rests either on the bearing surface (2) next to the test element (1) or on a reference surface of the test element (1) which rests on the bearing surface (2), and
- a second switch component (4), which is arranged parallel to the first switch component (3), rests on the test element (1), which has a position-specific surface shape, and can be deflected perpendicularly to the bearing surface (2) according to the surface shape of the test element (1),
the switching position of a switch for electrical signalling of a positioning of the test element (1) depending on a deflection of the second switch component (4) relative to the first switch component (3), and a plane, on which the first switch component (3) rests, acting as a reference plane, to which switching takes place.

2. Positioning device according to Claim 1, **characterized in that** the first switch component (3) is a pin which rests on the bearing surface (2), and the second switch component (4) is a movably supported journal with a conically tapering end (5) facing the test element (1), and that the test element (1), as a position-specific surface shape, has at least one recess (6) which receives the conically tapering end (5) of the journal.

3. Positioning device according to Claim 1, **characterized in that** the first switch component (3) is a shoulder (24) which is arranged next to the bearing surface (2) for the test element (1), and the second switch component (4) is a movably supported journal with a conically tapering end (5) facing the test element (1), and that the test element (1), as a position-specific surface shape, has at least one recess (6) which receives the conically tapering end (5) of the journal.

4. Positioning device according to Claim 3, **characterized in that** the shoulder (24) is cuboidal or stepped.

5. Positioning device according to Claim 3 or 4, **characterized in that** the shoulder (24) and the bearing surface (2) for the test element (1) are manufactured in one piece.

6. Positioning device according to Claim 1, **characterized in that** the first switch component (3) is a hollow journal (22) which rests on the reference surface of the test element (1), with a conically tapering end (15) which faces the test element (1) and has an opening (16), and the second switch component (4) is a pin (19) with a spherical tip (20), the pin (19) being supported elastically in the journal (22), and the spherical tip (20), in the sprung-back state, partly extending through the opening (16) beyond the conically tapering end (15) of the journal (22), and in the compressed state being pressed fully into the journal (22).

7. Positioning device according to Claim 6, **characterized in that** the surface shape of the test element (1) is a contour which influences the deflection of the pin (19), depending on the position of the test element (1).

8. Positioning device according to Claim 7, **characterized in that** the contour is in the form of a groove, which varies in breadth and depth, on the surface of the test element (1).

9. Positioning device according to one of Claims 1 to 8, **characterized in that** the first switch component (3) determines the deflection of a diaphragm (7), and the second switch component (4) transmits its deflection to a contact spring (8), by which means an electrical switch is closed if the contact spring (8) and diaphragm (7) touch each other.

10. Positioning device according to Claim 9, **characterized in that** the second switch component (4) extends through an opening (9) in the diaphragm (7).

11. Positioning device according to Claim 9, **characterized in that** the second switch component (4) has a lateral projection (25), via which the second switch component (4) transmits its deflection to the contact spring (8).

12. Positioning device according to one of Claims 9 to 11, **characterized in that** the first switch component (3) determines the deflection of the diaphragm (7) by contacting the diaphragm (7) with a contact surface, the diaphragm (7) being pretensioned in a direction towards the contact surface.

13. Positioning device according to Claim 12, **characterized in that** the contact surface contacts the diaphragm (7) on the side facing the contact spring (8), on the side facing away from the contact spring (8), or on both sides of the diaphragm (7).

14. Positioning device according to one of Claims 1 to 13, **characterized in that** the test element (1) is a capillary gap test element.

15. Positioning device according to one of Claims 1 to 14, **characterized in that** the test element (1) has a position-specific surface shape, which identifies a specimen receiving position and a specimen analysis position.

16. Method of positioning a test element (1) in an analysis system, with the following method steps:
- changing the position of a test element (1) in the analysis system on a bearing surface (2) under an elastically supported second switch component (4), until the second switch component (4), in a defined test element position because of the surface shape of the test element (1), experiences a defined deflection relative to a first switch component (3), which rests on the bearing surface (2) or a reference surface on the test element (1), and
- closing an electrical switch, which is used to signal positioning of the test element (1) electrically, on the basis of the defined deflection of the second switch component (4) relative to the first.

17. Method according to Claim 16, **characterized in that** the second switch component (4) fixes the test element (1) in a position in which the electrical switch is closed.

18. Method according to one of Claims 16 or 17, **characterized in that** the electrical switch is closed by an electrical contact being produced between a diaphragm (7) which is deflected by the first switch component (3) and a contact spring (8) which is deflected by the second switch component (4).

19. Method according to one of Claims 16 to 18, **characterized in that** the test element (1) is positioned in the analyser in at least one position, with the aid of the switch.

20. Method according to Claim 19, **characterized in that** the test element (1) in the analysis system is pushed out of a stock receptacle, positioned in a specimen receiving position, positioned in an analysis position and if required moved into a storage receptacle.

21. Method according to one of Claims 16 to 20, **characterized in that** the position of the test element
(1) in the analysis system is changed using an automatic feed motion, and that the feed motion is switched off in the case of a specified position of the electrical switch, or after a specified sequence of positions of the electrical switch.

22. Test element analysis system, comprising test elements (1) and an analyser, the test elements (1) having a defined position-specific surface shape, and the analyser having a positioning device according to one of Claims 1 to 15, to position a test element (1) in at least one specified position.

23. Test element analysis system according to Claim 22, **characterized in that** it has at least one positioning device according to one of Claims 1 to 9, to position a test element (1) in a specimen receiving position and in an analysis position.

24. Test element analysis system according to Claim 22 or 23, **characterized in that** it includes a system for withdrawing body fluid from a body part.

25. Test element analysis system according to one of Claims 22 to 24, **characterized in that** it includes a stock receptacle for test elements (1) and a withdrawing device for automatic withdrawal of at least one test element (1) from the stock receptacle.

26. Use of a test element analysis system according to one of Claims 22 to 25 for analysis of glucose in blood.

## Revendications

1. Dispositif de positionnement pour un élément de test (1) comprenant
- une surface d'appui (2) pour l'élément de test (1) ;
- un premier composant de circuit (3) servant de référence monté, soit sur la surface d'appui (2) à côté de l'élément de test (1), soit sur une surface de référence de l'élément de test (1) disposé sur la surface d'appui (2) ; et
- un deuxième composant de circuit (4) disposé parallèlement au premier composant de circuit (3), monté sur l'élément de test (1) présentant une configuration superficielle à spécificité de position, qui est à même de dévier, en fonction de la configuration superficielle respective de l'élément de test (1), perpendiculairement à la surface d'appui (2),
dans lequel la position de connexion d'un circuit pour la signalisation électrique d'un positionnement de l'élément de test (1) dépend d'une déviation du deuxième composant de circuit (4) par rapport au premier composant de circuit (3), un plan, sur lequel vient s'appuyer le premier composant de circuit (3), servant de plan de référence, par rapport auquel une connexion est mise en oeuvre.

2. Dispositif de positionnement selon la revendication 1, **caractérisé en ce que** le premier composant de circuit (3) représente une broche montée sur la surface d'appui (2) et le deuxième composant de circuit (4) représente un pivot monté en mobilité, possédant une extrémité (5) présentant une conicité orientée vers l'élément de test (1), et **en ce que** l'élément de test (1) présente, à titre de configuration superficielle à spécificité de position, au moins un évidement (6) dans lequel vient se loger l'extrémité conique (5) du pivot.

3. Dispositif de positionnement selon la revendication 1, **caractérisé en ce que** le premier composant de circuit (3) représente un talon (24) disposé à côté de la surface d'appui (2) pour l'élément de test (1) et le deuxième composant de circuit (4) représente un pivot monté en mobilité, possédant une extrémité (5) présentant une conicité orientée vers l'élément de test (1), et **en ce que** l'élément de test (1) présente, à titre de configuration superficielle à spécificité de position, au moins un évidement (6) dans lequel vient se loger l'extrémité conique (5) du pivot.

4. Dispositif de positionnement selon la revendication 3, **caractérisé en ce que** le talon (24) est réalisé en une configuration de parallélépipède rectangle ou à gradin.

5. Dispositif de positionnement selon la revendication 3 ou 4, **caractérisé en ce que** le talon (24) et la surface d'appui (2) pour l'élément de test (1) sont réalisés en une seule pièce.

6. Dispositif de positionnement selon la revendication 1, **caractérisé en ce que** le premier composant de circuit (3) représente un pivot creux (22) monté sur une surface de référence de l'élément de test (1), possédant une extrémité (15) présentant une conicité orientée vers l'élément de test (1) et une ouverture (16), et le deuxième composant de circuit (4) représente une broche (19) possédant un bout de forme sphérique (20), dans lequel la broche (19) est montée en élasticité dans le pivot (22) et le bout de forme sphérique (20) fait saillie, à l'état sorti par ressort, en partie à travers l'ouverture (16) au-delà de l'extrémité conique (15) du pivot (22) et, à l'état rentré par ressort, est enfoncé complètement dans le pivot (22).

7. Dispositif de positionnement selon la revendication 6, **caractérisé en ce que** la configuration superficielle de l'élément de test (1) représente un contour influençant, en fonction de la position respective de l'élément de test (1), la déviation de la broche (19).

8. Dispositif de positionnement selon la revendication 7, **caractérisé en ce que** le contour est réalisé sous la forme d'une rigole sur la surface de l'élément de test (1), dont la largeur et la profondeur varient.

9. Dispositif de positionnement selon l'une quelconque des revendications 1 à 8, **caractérisé en ce que** le premier composant de circuit (3) détermine la déviation d'une plaque élastique (7) et le deuxième composant de circuit (4) transfère sa déviation à un ressort de contact (8), la mise en contact du ressort de contact (8) et de la plaque élastique (7) donnant lieu à la fermeture d'un circuit électrique.

10. Dispositif de positionnement selon la revendication 9, **caractérisé en ce que** le deuxième composant de circuit (4) traverse une ouverture (9) pratiquée dans la plaque élastique (7).

11. Dispositif de positionnement selon la revendication 9, **caractérisé en ce que** le deuxième composant de circuit (4) représente une saillie latérale (25) par laquelle le deuxième composant de circuit (4) transfère sa déviation au ressort de contact (8).

12. Dispositif de positionnement selon l'une quelconque des revendications 9 à 11, **caractérisé en ce que** le premier composant de circuit (3) détermine la déviation de la plaque élastique (7) en établissant un contact entre la plaque élastique (7) et une surface de contact, la plaque élastique (7) étant mise en état de précontrainte dans une direction orientée vers la surface de contact.

13. Dispositif de positionnement selon la revendication 12, **caractérisé en ce que** la surface de contact entre en contact avec la plaque élastique (7) du côté tourné vers le ressort de contact (8), du côté se détournant du ressort de contact (8) ou bien des deux côtés de la plaque élastique (7).

14. Dispositif de positionnement selon l'une quelconque des revendications 1 à 13, **caractérisé en ce que** l'élément de test (1) est un élément de test à fente capillaire.

15. Dispositif de positionnement selon l'une quelconque des revendications 1 à 14, **caractérisé en ce que** l'élément de test (1) présente une configuration superficielle à spécificité de position qui caractérise une position de réception d'échantillon et une position d'analyse d'échantillon.

16. Procédé pour le positionnement d'un élément de test (1) dans un système d'analyse, comprenant les étapes opératoires suivantes :
- modification de la position d'un élément de test (1) dans le système d'analyse sur une surface d'appui (2) en dessous d'un deuxième composant de circuit (4) monté en élasticité, jusqu'à ce que le deuxième composant de circuit (4), dans une position définie d'élément de test sur base de la configuration superficielle de l'élément de test (1), subisse une déviation définie par rapport à un premier composant de circuit (3) monté sur la surface d'appui (2) ou sur une surface de référence sur l'élément de test (1) ; et
- fermeture d'un circuit électrique qui sert à la signalisation par voie électrique d'un positionnement de l'élément de test (1) sur base de la déviation définie du deuxième composant de circuit (4) par rapport au premier composant de circuit.

17. Procédé selon la revendication 16, **caractérisé en ce que** le deuxième composant de circuit (4) fixe l'élément de test (1) dans une position dans laquelle le circuit électrique est fermé.

18. Procédé selon la revendication 16 ou 17, **caractérisé en ce que** le circuit électrique est fermé lorsqu'un contact électrique est établi entre une plaque élastique (7) qui a été déviée à l'intervention du premier composant de circuit (3) et un ressort de contact (8) qui a été dévié à l'intervention du deuxième composant de circuit (4).

19. Procédé selon l'une quelconque des revendications 16 à 18, **caractérisé en ce que** l'élément de test (1) est placé dans l'appareil d'analyse au moins dans une position à l'aide du circuit.

20. Procédé selon la revendication 19, **caractérisé en ce que** l'élément de test (1), dans le système d'analyse, est poussé à l'extérieur d'un récipient de réserve, est placé dans une position de réception d'échantillon, est placé dans une position d'analyse et, de manière facultative, est transporté dans un récipient d'entreposage.

21. Procédé selon l'une quelconque des revendications 16 à 20, **caractérisé en ce que** la modification de la position de l'élément de test (1) dans le système d'analyse a lieu à l'aide d'une avance automatique, et **en ce que** l'avance est mise hors circuit dans une position déterminée du circuit électrique ou bien après une succession définie de positions du circuit électrique.

22. Système d'analyse d'un élément de test comprenant des éléments de test (1) et un appareil d'analyse, les éléments de test (1) présentant une configuration superficielle définie à spécificité de position et l'appareil d'analyse contient un dispositif de positionnement selon l'une quelconque des revendications 1 à 15 pour placer un élément de test (1) dans au moins une position définie.

23. Système d'analyse d'un élément de test selon la revendication 22, **caractérisé en ce qu'**il présente au moins un dispositif de positionnement selon l'une quelconque des revendications 1 à 9, pour placer un élément de test (1) dans une position de réception d'échantillon et dans une position d'analyse.

24. Système d'analyse d'un élément de test selon la revendication 22 ou 23, **caractérisé en ce qu'**il comprend un système pour le prélèvement d'un liquide organique à partir d'une partie du corps.

25. Système d'analyse d'un élément de test selon l'une quelconque des revendications 22 à 24, **caractérisé en ce qu'**il comprend un récipient de réserve pour des éléments de test (1) et un dispositif de prélèvement pour le prélèvement automatique d'au moins un élément de test (1) à partir du récipient de réserve.

26. Utilisation d'un système d'analyse d'un élément de test selon l'une quelconque des revendications 22 à 25 pour l'analyse du glucose dans le sang.
